(19) Europäisches Patentamt

European Patent Office

Office européen des brevets

(11) **EP 0 816 816 B1**

(12) **EUROPÄISCHE PATENTSCHRIFT**

(45) Veröffentlichungstag und Bekanntmachung des Hinweises auf die Patenterteilung:
**17.12.2003 Patentblatt 2003/51**

(51) Int Cl.⁷: **G01K 7/42**

(21) Anmeldenummer: **97106782.2**

(22) Anmeldetag: **24.04.1997**

(54) **Verfahren zur modellgestützten Nachbildung der Kühlmitteltemperatur bei einem Fahrzeug**

Method for model-supported simulation of the temperature of the cooling means in a motor vehicle

Procédé pour simuler, à l'aide d'un modèle, la température du moyen de refroidissement d'une voiture automobile

(84) Benannte Vertragsstaaten:
**DE ES FR GB IT SE**

(30) Priorität: **27.06.1996 DE 19625889**

(43) Veröffentlichungstag der Anmeldung:
**07.01.1998 Patentblatt 1998/02**

(73) Patentinhaber: **Bayerische Motoren Werke Aktiengesellschaft
80788 München (DE)**

(72) Erfinder:
• **Paul, Manfred
85221 Dachau (DE)**
• **Würtenberger, Michael
82008 Unterhaching (DE)**

(56) Entgegenhaltungen:
EP-A- 0 651 237          DE-A- 4 130 680
DE-A- 4 230 075          FR-A- 2 712 695

## Beschreibung

Die Erfindung betrifft ein Verfahren zur modellgestützten Nachbildung der Kühlmitteltemperatur bei einem Fahrzeug.

Bei herkömmlichen Fahrzeugen muß die Kühlmitteltemperatur beispielsweise für den Betrieb des Motors, der Klima- oder Heizungsanlage oder auch der Außentemperaturmessung bekannt sein. Zu diesem Zweck wird die Temperatur des Kühlmittels durch zumindest einen Sensor erfaßt.

Bei moderneren Fahrzeugen gibt ein Sensor sein Signal über einen Datenbus an einzelne Steuergeräte in einem Kraftfahrzeug ab. Dieser Datenbus wird jedoch vielfach erst ab Klemme 15 "ein" (dies entspricht Zündung "ein") betrieben. Bereits vor Klemme 15 "ein" muß jedoch zum Betrieb von Fahrzeugeinrichtungen oder zur Bestimmung von anderen Größen - beispielsweise der Klima- und Heizungsanlage bzw. der Außentemperatur - die Kühlmitteltemperatur bekannt sein. Aus diesem Grunde wird herkömmlicherweise ein zweiter Sensor vorgesehen, dessen Signal bereits vor Klemme 15 "ein" (also vor Einschalten der Zündung) ein der Kühlmitteltemperatur entsprechendes Signal abgibt. Auf der Grundlage dieses Signals können die entsprechenden Geräte, beispielsweise Klimaanlage und Heizungsgeräte, dann betrieben werden.

Nachteilig hierbei sind die zusätzlichen Kosten durch die Verwendung eines zweiten Sensors.

Aufgabe der Erfindung ist es, aus Kosten- und Platzgründen überflüssige Sensoren zur Erfassung der Kühlmitteltemperatur zu vermeiden.

Diese Aufgabe wird durch das in Anspruch 1 bzw. Anspruch 6 angegebene Verfahren gelöst.

Entsprechend dem Verfahren nach Anspruch 1 wird die Kühlmitteltemperatur zum Zeitpunkt des Abstellens des Antriebsmotors erfaßt. Ausgehend von diesem Wert erfolgt dann eine fortwährende Berechnung der aktuellen Kühlmitteltemperatur unter Einbeziehung von fahrzeugspezifischen Daten anhand eines Temperaturmodells.

Solche fahrzeugspezifische Daten können z. B. der Wärmeübergangswiderstand von einem Motor zu einem virtuellen Temperaturfühler, der Wärmeübergangswiderstand von einem solchen virtuellen Temperaturfühler zur Außenumgebung, ein Wärmeübergangswiderstand zwischen Motor und Außenumgebung sowie entsprechende Wärmekapazitäten - also die Wärmekapazität des Motors oder des Motorsystems und/oder von entsprechenden Temperaturfühlern - sein.

Für viele Zwecke reicht bereits eine näherungsweise - beispielsweise lineare - Berücksichtigung der entsprechenden Wärmeübergangswiderstände oder Wärmekapazitäten aus. Eine lineare Übergangsfunktion könnte in einem Modell erster Ordnung realisiert werden. Sollten aber weitere Einflüsse wie z. B. Wind, Umgebungseinflüsse, Räumlichkeiten etc. mitberücksichtigt werden, so könnten vorzugsweise höhere Ordnungen bei den Modellen (Übergangsfunktionen), d.h. nicht-lineare Wärmeübergangswiderstände/-kapazitäten, berücksichtigt werden.

Vorzugsweise sind die Wärmeübergangswiderstands- und/oder -kapazitätswerte experimentell ermittelt.

Herkömmlicherweise wird bei Fahrzeugen nach Abstellen des Motors die Außentemperaturerfassung eingestellt und der Wert auf den zuletzt erfaßten Wert eingefroren. Dies allerdings nur, wenn sich der Temperaturwert nach oben verändert. Bei einer Veränderung des Außentemperaturwertes nach unten erfolgt kein Einfrieren. Dies hat seinen tieferen Sinn darin, daß beispielsweise eine Heizungsregelung entsprechend der Differenz zwischen Außentemperatur und Kühlmitteltemperatur erfolgt und die Kühlmitteltemperatur insbesondere nach Abstellen des Motors kurzfristig infolge eines Nachheizvorgangs ansteigt. Fällt die Kühlmitteltemperatur dann nach einer bestimmten Zeit unterhalb eines vorgegebenen Grenzwertes, so wird die Sperre zur Erfassung der Außentemperatur wieder aufgehoben und deren Wert entsprechend angezeigt.

Bei dem Verfahren gemäß Anspruch 6 wird alternativ der Zeitpunkt ermittelt, ab dem eine theoretisch bestimmte Kühlmitteltemperatur einen vorgegebenen Grenzwert unterschreitet. Dies erfolgt mit Hilfe der Berücksichtigung von fahrzeugspezifischen Daten und anhand eines Temperaturmodells. Ab der Unterschreitung des theoretisch ermittelten Grenzwertes kann dann - wie vorgenannt erwähnt- eine Sperre wieder freigegeben werden.

Der Zeitpunkt kann vorzugsweise dadurch ermittelt werden, daß er aus einer Tabelle ausgelesen wird, in der bestimmte Betriebs- und/oder Umgebungsbedingungen sowie fahrzeugspezifische Bedingungen den entsprechenden Zeitpunkten zugeordnet sind. Ferner könnten in solchen Tabellen auch geschätzte Zeitkonstanten in Abhängigkeit von der Umgebung und des Fahrzeugtyps abgespeichert sein.

Eine andere Möglichkeit besteht auch darin, den Zeitpunkt unter Einbeziehung von Betriebs-, Umgebungs- und/oder fahrzeugspezifischen Bedingungen zu errechnen. Eine solche Berechnung ist beispielsweise mit der in Anspruch 9 angegebenen Formel näherungsweise möglich.

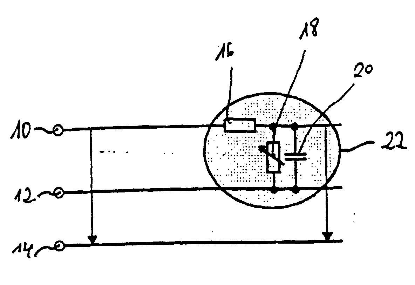

Die Erfindung wird nachfolgend anhand einer einzigen Zeichnung - auch hinsichtlich weiterer Vorteile und Merkmale - näher erläutert. In der Zeichnung ist in stark schematisierter Form ein Wärmeübergangsmodell dargestellt.

Dabei sind drei übereinander angeordnete Linien dargestellt, die entsprechende Wärmeniveaus darstellen sollen; und zwar die mit Bezugsziffer 10 bezeichnete Linie das Niveau der Motorverbrennungswärme, die mit Bezugsziffer 12 bezeichnete Linie die Außentemperatur und die mit Bezugsziffer 14 bezeichnete Linie eine Bezugstemperatur.

Mit Bezugsziffer 16 ist in der Weise eines elektrischen Schaltbildes ein Wärmeübergangswiderstand zwischen dem Motor und Kühlmittelkreislauf dargestellt. Ein veränderlicher Wärmewiderstand 18 ist für den Wärmeübergang vom Motorsystem nach außen nachgebildet.

Parallel zu letzterem ist - ebenfalls nach Art eines elektrischen Schaltbildes - eine Wärmekapazität 20 des Motors geschaltet, die die Wärmespeicherfähigkeit des Motorblockes, mit Kühlmittelkreislauf und ähnlichem Beiwerk umfaßt.

Insgesamt ist mit dem umkreisten Bereich 22 somit ein Temperaturmodell gebildet, mit dem ein Wärmeübergang von verschiedenen Fahrzeugteilen auf andere oder auf die Außenumgebung nachgebildet und das Temperaturverhalten für einzelne Fahrzeugbereiche bestimmt werden kann.

Insbesondere kann in modellhafter Weise unter Einbeziehung der fahrzeugspezifischen Daten, die in der gezeigten Figur durch die entsprechenden Wärmeübergangswiderstände und -kapazitäten dargestellt sind, die Kühlmitteltemperatur nach Abschalten des Motors eines Fahrzeugs nachgebildet werden.

Dabei kann ein zusätzlicher Sensor ersetzt werden, der herkömmlicherweise neben einem weiteren für den Fahrbetrieb des Fahrzeugs vorgesehenen Kühlmitteltemperatursensor angeordnet ist.

Zwei Sensoren sind bislang insofern eingesetzt worden, weil ein erster Sens sor mit einem Datenbussystem eines Kraftfahrzeugs verbunden ist, welcher erst ab einem Signal Zündung ein" (Klemme 15 aktiv) seine Daten an entsprechende Einrichtungen im Kraftfahrzeug weiterleiten kann.

Um nun bereits vor dem Einschalten der Zündung des Kraftfahrzeugs auf die Kühlmitteltemperatur zurückgreifen zu können, wurde bislang ein zweiter Sensor verwendet, der neben Kostengründen sich auch platzmäßig im Motorraum negativ auswirkt.

Die Kühlmitteltemperatur wird bereits vor Einschalten der Zündung benötigt, da beispielsweise aufgrund der Differenz zwischen Kühlmitteltemperatur und Außentemperatur eine Dämpfung ermittelt wird, mit welcher eine Anzeige dem Temperatursignal folgt und die Außen- oder Kühlmitteltemperatur wiedergibt.

Eine mögliche Dämpfung für die Außentemperaturanzeige wird nachfolgend beispielsweise erläutert:

Steht das Fahrzeug, ist die Differenz zwischen Außentemperatur und Kühlmitteltemperatur nur klein, so wird eine Dämpfung von etwa 1 Stunde verwendet. Ist dagegen die Differenz zwischen Außentemperatur und Kühlmitteltemperatur bei stehendem Fahrzeug groß, so wird ein Dämpfungswert von etwa 11.000 Stunden verwendet.

Bei dem angegebenen Verfahren wird der vor Einschalten der Zündung aktive Sensor nunmehr durch ein modellgestütztes System zur Erfassung der Kühlmitteltemperatur ersetzt.

Dabei wird in einem ersten Schritt das thermische Verhalten des Meßsystems mit einem Ersatzmodell beschrieben, wie dies in der Zeichnung dargestellt ist. Es soll die systematischen Fehler, die durch das Aufheizen des Sensors durch die Motorwärme entstehen, exakt beschreiben.

Das Abkühlverhalten des Motors kann durch eine lineare Übergangsfunktion erster Ordnung angenähert werden. Dabei handelt es sich nur um eine Näherung für eine Standardsituation, da äußere Einflüsse wie Wind, Umgebung, Räumlichkeiten etc. nicht berücksichtigt werden. Für die Berücksichtigung solcher Einflüsse können möglicherweise Übergangsfunktionen höherer Ordnung (nicht-lineare Wärmewiderstände/-kapazitäten) verwendet werden.

Im vorliegenden Fall ist nur eine qualitative Beurteilung der Temperaturdifferenz zwischen der Kühlmitteltemperatur und der Außentemperatur erforderlich. Daher reicht diese Näherung aus.

In der Praxis ist anhand von acht Abkühlversuchen eine Tabelle erstellt worden, aus der Zeitkonstanten für verschiedene Fahrzeug und Umgebungsbedingungen ersichtlich sind.

Die Zeit $t_W$, die zum Erreichen dieser Temperaturdifferenz gewartet werden muß, kann aus der Standardabkühlzeit T und der zu Beginn des Standardversuchs herrschenden Temperaturdifferenz $\Delta$ T nach der Formel

$$t_W = - T \ln (10/\Delta \, T)$$

berechnet werden.

Dies ergibt die Zeit $t_W$, ab welcher eine theoretisch ermittelte Kühlmitteltemperatur einen vorgegebenen Grenzwert unterschreitet.

Alternativ dazu kann natürlich auch eine Tabelle angelegt werden, welche anhand der Umgebungs- und/oder fahrzeugspezifischen Parameter den Zeitpunkt angibt, ab welchem die Kühlmitteltemperatur einen bestimmten Grenzwert unterschreitet.

Schließlich kann auch als eine Alternative der Weg gewählt werden, die Kühlmitteltemperatur anhand der vorgegebenen Wärmeübergangswiderstands- und/oder Wärmekapazitätswerte nach dem in der Zeichnung angegebenen Modell fortlaufend zu berechnen. Der Vorteil des letzteren Verfahrens besteht darin, daß die Kühlmitteltemperatur dann in jedem Zeitpunkt (auch bei ausgeschaltetem Motor) vorliegen würde, wogegen bei den ersten beiden Verfahren lediglich ein Zeitpunkt angegeben werden würde, in denen eine theoretisch ermittelte Kühlmitteltemperatur einen vorbestimmten Grenzwert unterschreitet.

Alle vorgenannten Verfahren haben jedoch den Vorteil, daß auf einen Sensor verzichtet werden kann, was sich sowohl auf die Kosten als auch auf das Platzangebot im Motor positiv auswirkt.

**Patentansprüche**

1. Verfahren zur modellgestützten Nachbildung der Kühlmitteltemperatur bei einem Fahrzeug mit den Schritten:

   - Erfassen der Kühlmitteltemperatur zum Zeitpunkt des Abstellens des Antriebsmotors,
   - ausgehend von dieser erfaßten Kühlmitteltemperatur, fortwährende Berechnung der aktuellen Kühlmitteltemperatur zu einem späteren Zeitpunkt nach Abstellen des Antriebsmotors unter Einbeziehung von fahrzeugspezifischen Daten anhand eines Temperaturmodells.

2. Verfahren nach Anspruch 1,
   **dadurch gekennzeichnet,**
   **daß** als fahrzeugspezifische Daten zumindest der Wärmeübergangswiderstand vom Motor zu einem virtuellen Temperaturfühler, der Wärmeübergangswiderstand vom virtuellen Temperaturfühler zur Außenumgebung, der Wärmeübergangswiderstand zwischen Motor und Außenumgebung und/oder die Wärmekapazitäten von entsprechenden Fahrzeugteilen berücksichtigt werden.

3. Verfahren nach Anspruch 1 oder 2,
   **dadurch gekennzeichnet,**
   **daß** bezüglich der Wärmeübergangswiderstände und Wärmekapazitäten nur Übergangsfunktionen erster Ordnung berücksichtigt werden.

4. Verfahren nach Anspruch 3,
   **dadurch gekennzeichnet,**
   **daß** bezüglich der Wärmeübergangswiderstände und den Wärmekapazitäten zusätzlich Übergangsfunktionen höherer Ordnung und nicht-lineare Charakteristiken berücksichtigt werden.

5. Verfahren nach einem der vorhergehenden Ansprüche,
   **dadurch gekennzeichnet,**
   **daß** die Wärmeübergangswiderstands- und/oder die Wärmekapazitätswerte experimentell ermittelt sind.

6. Verfahren zur Ermittlung eines Zeitpunktes, ab dem eine theoretisch bestimmte kühlmitteltemperatur einen vorgegebenen Wert unterschreitet, unter Verwendung einer modellgestützten Nachbildung der Kühlmitteltemperatur bei einem Fahrzeug mit den Schritten:

   - Erfassen der Kühlmitteltemperatur zum Zeitpunkt des Abstellens des Antriebsmotors,
   - Ermittlung des Zeitpunktes, ab dem die theoretisch bestimmte Kühlmitteltemperatur einen vorgegebenen Grenzwert unterschreitet mit Hilfe von fahrzeugspezifischen Daten und anhand eines Temperaturmodells.

7. Verfahren nach Anspruch 6,
   **dadurch gekennzeichnet,**
   **daß** der Zeitpunkt aus einer Tabelle ausgelesen wird, in der bestimmte Betriebs- und/oder Umgebungsbedingungen sowie fahrzeugspezifischen Daten den entsprechenden Zeitpunkten zugeordnet sind.

8. Verfahren nach Anspruch 6,
   **dadurch gekennzeichnet,**
   **daß** der Zeitpunkt unter Einbeziehung von Betriebs-, Umgebungsund/oder fahrzeugspezifischen Bedingungen errechnet wird.

9. Verfahren nach Anspruch 8,
   **dadurch gekennzeichnet,**
   **daß** die Berechnung anhand der Formel

   $$t_W = - T \ln(10/\Delta T)$$

   durchgeführt wird, wobei T die Kühlmitteltemperatur zum Zeitpunkt des Abschalten des Motors und $\Delta T$ die Temperaturdifferenz zwischen der Kühlmitteltemperatur und der Außenumgebungstemperatur ist.

**Claims**

1. A method for the model-assisted simulation of the coolant temperature in a vehicle comprising the steps:

   - detecting the coolant temperature at the point in time of turning off the driving engine,
   - proceeding from this detected coolant temperature, continuous calculation of the coolant temperature which is current at a later point in time after turning off the driving engine using vehicle-specific data with the aid of a temperature model.

2. A method according to claim 1, **characterised in that** at least the heat transmission resistance from the engine to a virtual temperature sensor, the heat transmission resistance from the virtual temperature sensor to the external environment, the heat transmission resistance between the engine and the external environment and/or the heat capacities of corresponding vehicle parts are taken into account as vehicle-specific data.

3. A method according to claim 1 or 2, **characterised in that** only transmission functions of a first order are taken into account with respect to the heat transmission resistances and heat capacities.

4. A method according to claim 3, **characterised in that** transmission functions of a higher order and non-linear characteristics are also taken into account with respect to the heat transmission resistances and the heat capacities.

5. A method according to any one of the preceding claims, **characterised in that** the heat transmission resistance and/or the heat capacity values are determined experimentally.

6. A method for determining a point in time, from which a theoretically determined coolant temperature falls below a predetermined value, using a model-assisted simulation of the coolant temperature in a vehicle comprising the steps:

   - detecting the coolant temperature at the point in time of turning off the driving engine,
   - determining the point in time from which the theoretically determined coolant temperature falls below a predetermined limit value with the aid of vehicle-specific data and with the aid of a temperature model.

7. A method according to claim 6, **characterised in that** the point in time is read out from a table in which specific operating and/or environmental conditions and vehicle-specific data are allocated to the corresponding points in time.

8. A method according to claim 6, **characterised in that** the point in time is calculated using operating, environmental and/or vehicle-specific conditions.

9. A method according to claim 8, **characterised in that** the calculation is carried out with the aid of the formula

$$t_w = - T \text{ in } (10/\Delta T)$$

wherein T is the coolant temperature at the point in time of turning off the engine and $\Delta T$ is the temperature difference between the coolant temperature and the temperature of the external environment.

## Revendications

1. Procédé pour simuler, à l'aide d'un modèle, la température du moyen de refroidissement d'une voiture automobile, comportant les étapes suivantes :

   - enregistrement de la température du moyen de refroidissement au moment de l'arrêt du moteur d'entraînement,
   - à partir de cette température du moyen de refroidissement enregistrée, calcul continuel de la température actuelle du moyen de refroidissement à un moment ultérieur après l'arrêt du moteur d'entraînement, en prenant en compte des données spécifiques au véhicule et à l'aide d'un modèle de température.

2. Procédé selon la revendication 1, **caractérisé en ce qu'** au moins la résistance thermique du moteur à un capteur de température virtuel, la résistance thermique du capteur de température virtuel à l'environnement extérieur, la résistance thermique entre le moteur et l'environnement extérieur et/ou la capacité thermique d'éléments correspondants du véhicule sont pris en compte en tant que données spécifiques au véhicule.

3. Procédé selon la revendication 1 ou 2, **caractérisé en ce qu'** en ce qui concerne les résistances thermiques et les capacités thermiques, seules les fonctions de transfert de premier niveau sont prises en compte.

4. Procédé selon la revendication 3, **caractérisé en ce que** les résistances thermiques et les capacités thermiques, des fonctions de transfert supplémentaires de niveau plus élevé, ainsi que des caractéristiques non linéaires, sont prises en compte,

5. Procédé selon l'une des revendications précédentes, **caractérisé en ce que** les valeurs de résistance thermique et de capacité thermique sont déterminées de façon expérimentale.

6. Procédé de détermination d'un moment à partir duquel une température de moyen de refroidissement calculée de façon théorique descend en dessous d'une valeur prédéterminée, en utilisant une simulation, à l'aide d'un modèle, de la température du moyen de refroidissement d'une voiture automobile, comportant les étapes suivantes :

   - enregistrement de la température du moyen de refroidissement au moment de l'arrêt du moteur d'entraînement,
   - détermination du moment à partir duquel la température du moyen de refroidissement calculée de façon théorique descend en dessous d'une valeur limite prédéterminée, à l'aide de données spécifiques au véhicule et d'un modèle de température.

**7.** Procédé selon la revendication 6, **caractérisé en ce que** le moment est déterminé à partir d'un tableau dans lequel des conditions de fonctionnement et/ou des conditions environnementales, ainsi que des données spécifiques au véhicule, sont associées aux moments correspondants.

**8.** Procédé selon la revendication 6, **caractérisé en ce que** le moment est calculé en prenant en compte des conditions de fonctionnement, des conditions environnementales et/ou des conditions spécifiques au véhicule.

**9.** Procédé selon la revendication 8, **caractérisé en ce que** le calcul est effectué à l'aide de la formule $t_w = -T \ln(10/\Delta T)$ où $T$ est la température du moyen de refroidissement au moment de l'arrêt du moteur et $\Delta T$ est la différence de température entre la température du moyen de refroidissement et la température de l'environnement extérieur.